(19) **Europäisches Patentamt / European Patent Office / Office européen des brevets**

(11) **EP 3 051 374 A1**

(12) **EUROPEAN PATENT APPLICATION**
published in accordance with Art. 153(4) EPC

(43) Date of publication:
03.08.2016 Bulletin 2016/31

(51) Int Cl.:
*G05B 23/02* (2006.01)  *G06F 11/34* (2006.01)
*G06F 17/15* (2006.01)

(21) Application number: 14847009.9

(22) Date of filing: 11.09.2014

(86) International application number:
**PCT/JP2014/004707**

(87) International publication number:
**WO 2015/045319 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 26.09.2013 JP 2013199943

(71) Applicant: **NEC Corporation
Tokyo 108-8001 (JP)**

(72) Inventor: **KATO, Kiyoshi
Tokyo 108-8001 (JP)**

(74) Representative: **Vossius & Partner
Patentanwälte Rechtsanwälte mbB
Siebertstrasse 3
81675 München (DE)**

(54) **INFORMATION PROCESSING DEVICE AND ANALYSIS METHOD**

(57) Even when there is a large time lag between metrics of a target system, a decrease in analysis accuracy of the target system is prevented. An analysis apparatus (100) includes a processing unit (140) and pre-processing unit (130). The processing unit (140) performs comparative analysis of values of a first metric and a second metric in a system to be analyzed. The pre-processing unit (130) identifies, with respect to the comparative analysis of the first metric and the second metric, a temporal correspondence relation between respective pieces of data used as the first metric and the second metric.

## Fig. 1

**Description**

[Technical Field]

The present invention relates to an information processing apparatus and an analysis method.

[Background Art]

Analysis apparatuses which compare time series of measurement values (metric values) of sensors or the like in a system to be analyzed (a target system) to analyze the status of the target system are known.
As such an analysis apparatus, for example, PTL 1 describes an analysis apparatus (operation management apparatus) which employs a correlation model of a target system. The operation management apparatus described in PTL 1 determines, based on time series of measurement values of a plurality of sensors or the like of a target system, a correlation function representing the correlation between the sensors in a normal state by system identification method to generate a correlation model of the target system. The operation management apparatus then detects destruction (correlation destruction) of the correlation by using the generated correlation model to determine a fault cause of the target system.

[Citation List]

[Patent Literature]

[PTL 1] Japanese Patent Publication No. 4872944

[Summary of Invention]

[Technical Problem]

When the above-described analysis apparatus is used to analyze states of target systems, a large time lag (time difference) as compared with a measurement interval of measurement value may be generated between measurement values of different sensors in some of the target systems. For example, a case in which the target system is a bridge and the sensor is a vibration sensor that is placed on the bridge is assumed. In this case, between measurement values of different sensors, there is a small time lag generated when a vibration of a vehicle passing through the bridge propagates through steel constituting the bridge and a large time lag generated when a moving vehicle approaches each sensor successively. In a case that the target system is an air-conditioner and the sensors are a current sensor and a temperature sensor for surroundings of the air-conditioner, the temperature changes in delay relative to a change of the state of the air-conditioner. There is thus a large time lag between measurement values of the current sensor and the temperature sensor. Further, in a case that the target system is a vehicle and the sensors are a sensor for a drive system such as an engine of the vehicle and a sensor for an operation system for a driver, there is a delay until a driver can take an action after recognizing a change in the state of the driving system. There are thus also a large time lag between measurement values of the drive system sensor and the operation system sensor.
When there is a large time lag between measurement values of sensors as described above, analysis accuracy may decrease.
For example, the operation management apparatus of PTL 1 determines a correlation function such as the following equation Math. 1 between sensors when a target system is analyzed.

$$[\mathrm{Math.\ 1}]$$

$$Y(t) = A_1 Y(t-1) + A_2 Y(t-2) + \cdots + A_N Y(t-\mathrm{N}) + B_1 X(t) + B_2 X(t-1) + \cdots + B_M X(t-(M-1))$$

In the equation Math. 1, X(t) and Y(t) are measurement values of the sensors at time t which are an input and an output of the correlation function, respectively. The operation management apparatus determines the coefficients $A_1, A_2, \cdots, A_N, B_1, B_2, \cdots, B_M$ in the equation Math. 1 for each pair of sensors in a plurality of sensors. Here, values of N and M are input in advance by, for example, a user. The operation management apparatus then detects correlation destruction between the sensors by using the determined correlation function.
When a time lag between sensors is larger than the value of M in the equation Math. 1, the correlation cannot be sufficiently approximated by the correlation function of the equation Math. 1, whereby prediction accuracy by the correlation function decreases. In this case, correlation destruction between the sensors cannot be accurately detected, whereby analysis accuracy decreases.

An object of the present invention is to resolve the above-described issue and to provide an information processing apparatus and an analysis method that prevent a decrease in analysis accuracy of the target system even when there is a large time lag between metrics of a target system.

[Solution to Problem]

An information processing apparatus according to an exemplary aspect of the invention includes: a processing means for performing comparative analysis of values of a first metric and a second metric in a system to be analyzed; and a pre-processing means for identifying, with respect to the comparative analysis of the first metric and the second metric, a temporal correspondence relation between respective pieces of data used as the first metric and the second metric.

An analysis method according to an exemplary aspect of the invention includes: identifying, with respect to a comparative analysis of a first metric and a second metric in a system to be analyzed, a temporal correspondence relation between respective pieces of data used as the first metric and the second metric; and performing the comparative analysis of values of the first metric and the second metric.

A computer readable storage medium according to an exemplary aspect of the invention records thereon a program, causing a computer to perform a method including: identifying, with respect to a comparative analysis of a first metric and a second metric in a system to be analyzed, a temporal correspondence relation between respective pieces of data used as the first metric and the second metric; and performing the comparative analysis of values of the first metric and the second metric.

[Advantageous Effects of Invention]

An advantageous effect of the present invention is that a decrease in analysis accuracy of a target system can be prevented even when there is a large time lag between metrics of the target system.

[Brief Description of Drawings]

[Fig. 1] Fig. 1 is a block diagram illustrating a characteristic configuration of a first exemplary embodiment of the present invention.

[Fig. 2] Fig. 2 is a block diagram illustrating a configuration of an analysis system in the first exemplary embodiment of the present invention.

[Fig. 3] Fig. 3 is a block diagram illustrating a configuration of an analysis apparatus 100 implemented on a computer in the first exemplary embodiment of the present invention.

[Fig. 4] Fig. 4 is a flow chart illustrating an operation of the analysis apparatus 100 in the first exemplary embodiment of the present invention.

[Fig. 5] Fig. 5 is a diagram illustrating an example of time series data 121 in the first exemplary embodiment of the present invention.

[Fig. 6] Fig. 6 is a diagram illustrating an example of time lag information 122 in the first exemplary embodiment of the present invention.

[Fig. 7] Fig. 7 is a diagram illustrating an example of a correlation model 123 in the first exemplary embodiment of the present invention.

[Fig. 8] Fig. 8 is a diagram illustrating an example of a pattern (change pattern) of a time-series change in the first exemplary embodiment of the present invention.

[Fig. 9] Fig. 9 is a diagram illustrating an example of extracting a time lag in the first exemplary embodiment of the present invention.

[Fig. 10] Fig. 10 is a diagram illustrating an example of a display screen 501 (time lag selection) in the first exemplary embodiment of the present invention.

[Fig. 11] Fig. 11 is a diagram illustrating an example of the display screen 501 (display of correlation destruction) in the first exemplary embodiment of the present invention.

[Fig. 12] Fig. 12 is a diagram illustrating an example of the display screen 501 (comparison of time series) in the first exemplary embodiment of the present invention.

[Fig. 13] Fig. 13 is a block diagram illustrating a configuration of an analysis system in the second exemplary embodiment of the present invention.

[Description of Embodiments]

(First Embodiment)

A first exemplary embodiment of the present invention will be described.

First, a configuration of an analysis system of the first exemplary embodiment of the present invention will be described.

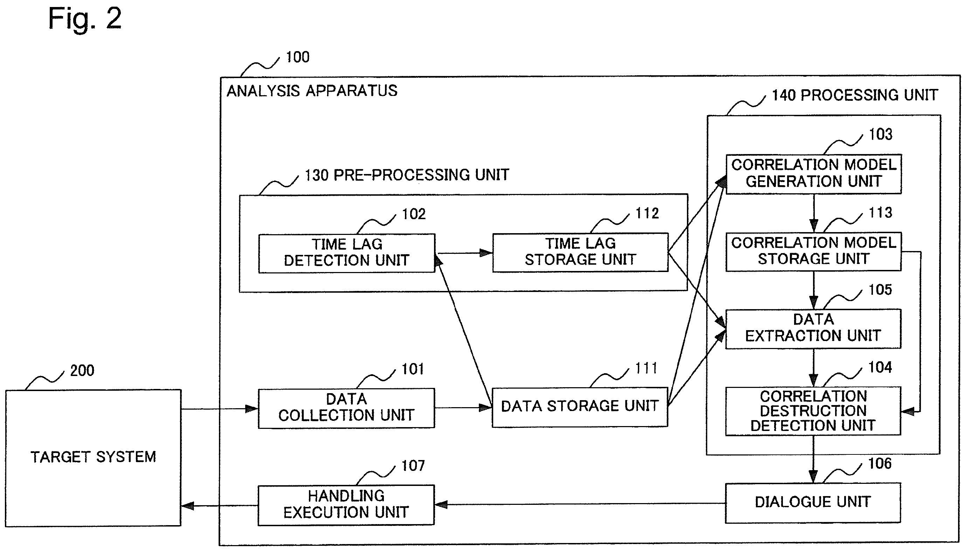

Fig. 2 is a block diagram illustrating a configuration of the analysis system in the first exemplary embodiment of the present invention.

Referring to Fig. 2, the analysis system in the first exemplary embodiment of the present invention includes an analysis apparatus 100 and a target system 200 which is a system to be analyzed. The analysis apparatus 100 and the target system 200 are communicably connected via a network or the like.

The analysis apparatus 100 is one exemplary embodiment of an information processing apparatus of the present invention.

Here, the target system 200 is one of a variety of systems in which sensors for monitoring the state of systems are arranged. For example, the target system 200 is a structure such as a building or a bridge on which vibration sensors for diagnosing deterioration, temperature sensors, and/or the like are arranged. The target system 200 may be a plant such as a production plant or a power plant in which temperature sensors, flow sensors, and/or the like for monitoring an operation state are arranged. The target system 200 may be a mobile body such as a vehicle, a ship, or an aircraft in which measuring instruments such as a variety of sensors and/or sequencers for monitoring a driving state are incorporated. The target system 200 is not restricted to a system using physical sensors as described above, and may be a computer system which measures performance information for operation management. The target system 200 may be a computer system in which environment sensors for collecting power, temperature, or the like at the same time as the performance information are further arranged.

Here, each sensor and each performance item measured in the target system 200 are referred to as a "metric". The term "metric" herein corresponds to the term "element" which is in PTL 1 referred to as a target for generating a correlation model.

The analysis apparatus 100 analyzes the state of the target system 200 based on a time series of measurement values of metrics collected from the target system 200.

The analysis apparatus 100 includes a data collection unit 101, a data storage unit 111, a pre-processing unit 130, a processing unit 140, a dialogue unit 106, and a handling execution unit 107.

The data collection unit 101 collects measurement values of each metric such as measurement values detected by each sensor, from the target system 200 at a predetermined collection interval.

The data storage unit 111 stores a time series of the measurement values of the metrics collected by the data collection unit 101 as time series data 121.

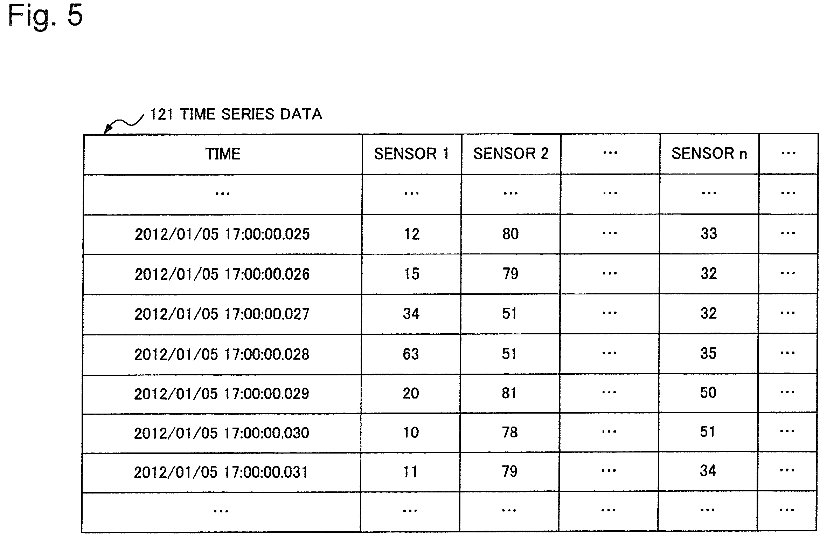

Fig. 5 is a diagram illustrating an example of the time series data 121 in the first exemplary embodiment of the present invention. In the example of Fig. 5, the time series data 121 includes a time series of measurement values collected every 1 msec for each of sensors 1, 2, ···, n.

The pre-processing unit 130 identifies a temporal correspondence relation between metric values. In the first exemplary embodiment of the present invention, the pre-processing unit 130 identifies, as the temporal correspondence relation, a time lag of a time-series change of one metric relative to a time-series change of another metric.

The pre-processing unit 130 includes a time lag detection unit 102 and a time lag storage unit 112.

The time lag detection unit 102 generates time lag information 122 based on the time series data 121 stored in the data storage unit 111.

The time lag information 122 represents a time lag for each pair of metrics in a plurality of metrics. In the exemplary embodiment of the present invention, the time lag in a pair of metrics is a time difference between time-series changes of the pair of metrics in a case that similar changes in time-series occur in one of the pair of metrics (preceding metric) and the other of the pair of metrics (succeeding metric). The time lag may be a roughly estimated value of the time difference. In the exemplary embodiment of the present invention, the time lag is detected by comparing a series of a patterns of a time-series change of a metric for every predetermined length of time period (time period consisting of a plurality of monitoring intervals), as described below. For this reason, a value obtained by multiplying the length of time period for extracting a pattern of the time-series change by an integer is used for the value of a time lag.

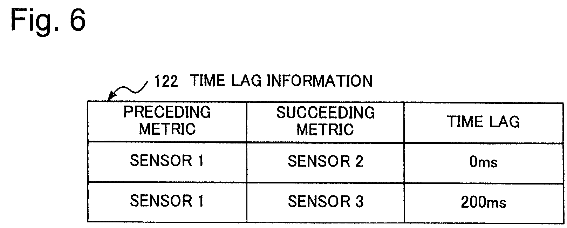

Fig. 6 is a diagram illustrating an example of the time lag information 122 in the first exemplary embodiment of the present invention. In an example of Fig. 6, a time lag of a succeeding metric relative to a preceding metric is illustrated for each pair of metrics.

The time lag storage unit 112 stores the time lag information 122 generated by the time lag detection unit 102.

The processing unit 140 performs a comparative analysis between metric values in a target system. In the first exemplary embodiment of the present invention, the processing unit 140 performs, as the comparative analysis, an analysis based on a correlation between metrics (generation of a correlation model 123 and detection of correlation destruction).

The processing unit 140 includes a correlation model generation unit 103, a correlation model storage unit 113, a correlation destruction detection unit 104, and a data extraction unit 105.

The correlation model generation unit 103 generates the correlation model 123 of the target system 200 based on the time series data 121 stored in the data storage unit 111.

The correlation model 123 includes a correlation function (or a conversion function) representing a correlation of each pair of metrics in a plurality of metrics. For example, the correlation function is represented by the above-described equation Math. 1. In other words, the correlation function is a function that predicts a value of one metric (output metric) of a pair of metrics at time t from a measurement value of the other metric (input metric) at or before time t and a measurement value of the one metric (output metric) before time t. The correlation model generation unit 103 determines coefficients of a correlation function in a similar manner to the operation management apparatus of PTL 1. In other words, the correlation model generation unit 103 determines coefficients $A_1, A_2, \cdots, A_N, B_1, B_2, \cdots, B_M$ of the correlation function of the equation Math. 1 for each pair of metrics by system identification processing based on the time series data 121 of a predetermined modeling time period.

On the other hand, in the exemplary embodiment of the present invention, a shifted (delayed) time series is used. The shifted time series is obtained by shifting (delaying) the above-described time series of a preceding metric by a time lag, with reference to the time lag information 122 stored in the time lag storage unit 112. The correlation model generation unit 103 determines the correlation function using a time series obtained by shifting (delaying) the above-described time series of a preceding metric by a time lag as a time series of an input metric, and using the above-described time series of a succeeding metric as a time series of an output metric.

In a similar manner to the operation management apparatus of PTL 1, the correlation model generation unit 103 may calculate a weight for each pair of metrics based on a conversion error of a correlation function to obtain, as the correlation model 123, a set of correlation functions (effective correlation functions) in which the weight is equal to or larger than a predetermined value.

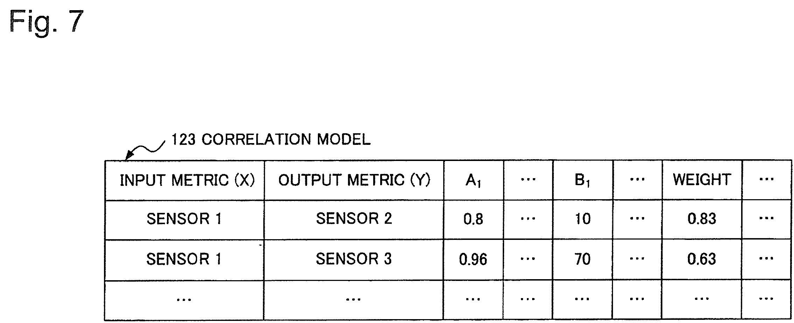

Fig. 7 is a diagram illustrating an example of the correlation model 123 in the first exemplary embodiment of the present invention. In an example of Fig. 7, values of coefficients $A_1, \cdots, B_1, \cdots$, in the equation Math. 1 for each pair of metrics are illustrated.

The correlation model storage unit 113 stores the correlation model 123 generated by the correlation model generation unit 103.

In a similar manner to the operation management apparatus of PTL 1, the correlation destruction detection unit 104 determines whether a correlation included in the correlation model 123 is maintained or destroyed by using newly collected measurement values of the metrics.

Here, the correlation destruction detection unit 104 uses newly collected measurement values of the metrics which are extracted by the data extraction unit 105. The correlation destruction detection unit 104 calculates, for each pair of the metrics, a difference (prediction error) between a measurement value of an output metric at time t and a prediction value of an output metric at time t calculated by using the correlation function. The correlation destruction detection unit 104 determines that the correlation is destroyed when the calculated difference is equal to or more than a predetermined value.

The data extraction unit 105 extracts newly collected measurement values of the metrics which are needed for detection of correlation destruction from the time series data 121 stored in the data storage unit 111, and outputs them to the correlation destruction detection unit 104. The data extraction unit 105 outputs measurement values of the input metric a time lag earlier with reference to the time lag information 122 stored in the time lag storage unit 112.

The dialogue unit 106 presents a detection result of correlation destruction to a user or the like.

The dialogue unit 106 may also instructs the handling execution unit 107 to execute an operation for handling the correlation destruction in accordance with an operation of a user or the like. In this case, the handling execution unit 107 executes an instructed handling operation on the target system 200.

The analysis apparatus 100 may be a computer which includes a CPU (Central Processing Unit) and a storage medium storing a program, and operates by control based on the program. The data storage unit 111, the correlation model storage unit 113, and the time lag storage unit 112 may be individual storage media, or may be configured as one storage medium.

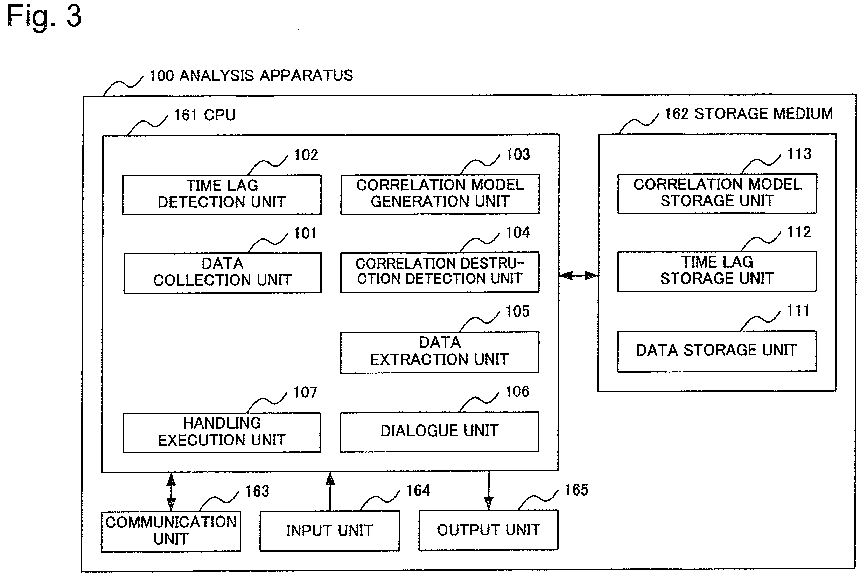

Fig. 3 is a block diagram illustrating a configuration of the analysis apparatus 100 implemented on a computer in the first exemplary embodiment of the present invention.

Referring to Fig. 3, the analysis apparatus 100 includes a CPU 161, a storage medium 162, a communication unit 163, an input unit 164, and an output unit 165. The CPU 161 executes a computer program for embodying functions of the data collection unit 101, the time lag detection unit 102, the correlation model generation unit 103, the correlation destruction detection unit 104, the data extraction unit 105, the dialogue unit 106, and the handling execution unit 107. The storage medium 162 stores data of the data storage unit 111, the time lag storage unit 112, and the correlation model storage unit 113. The communication unit 163 receives measurement values for each metric from the target system 200. The input unit 164 is, for example, an input device such as a keyboard, and receives from a user or the like an input to the dialogue unit 106. The output unit 165 is, for example, a display device such as a display, and displays an output from the dialogue unit 106 to a user or the like.

Next, an operation of the analysis apparatus 100 in the first exemplary embodiment of the present invention will be described.

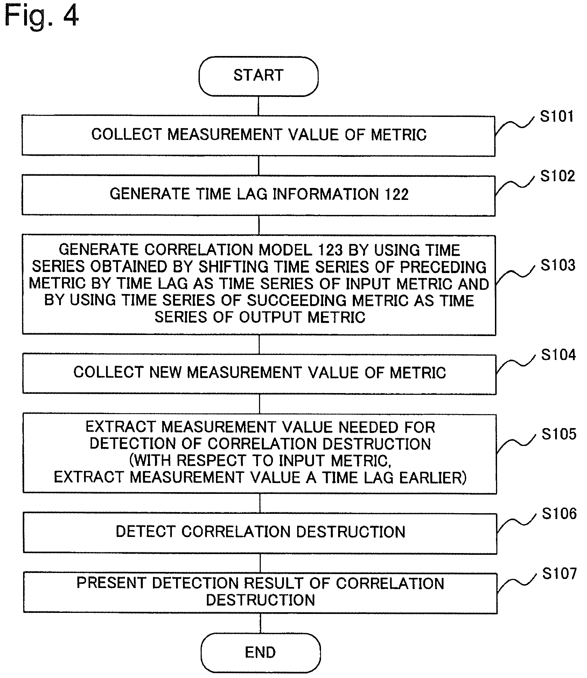

Fig. 4 is a flow chart illustrating the operation of the analysis apparatus 100 in the first exemplary embodiment of the present invention.

First, the data collection unit 101 collects measurement values for each metric from the target system 200 at a predetermined collection interval (step S101). The data collection unit 101 stores a time series of the collected measurement values for each metric as the time series data 121 in the data storage unit 111.

For example, the data collection unit 101 stores time series data 121 as illustrated in Fig. 5.

The time lag detection unit 102 of the pre-processing unit 130 generates the time lag information 122 based on the time series data 121 (step S102). The time lag detection unit 102 stores the generated time lag information 122 in the time lag storage unit 112.

Here, the time lag detection unit 102 detects a time lag by, for example, comparing, for each pair of metrics, series of time-series change patterns of the metrics for each predetermined length of time period.

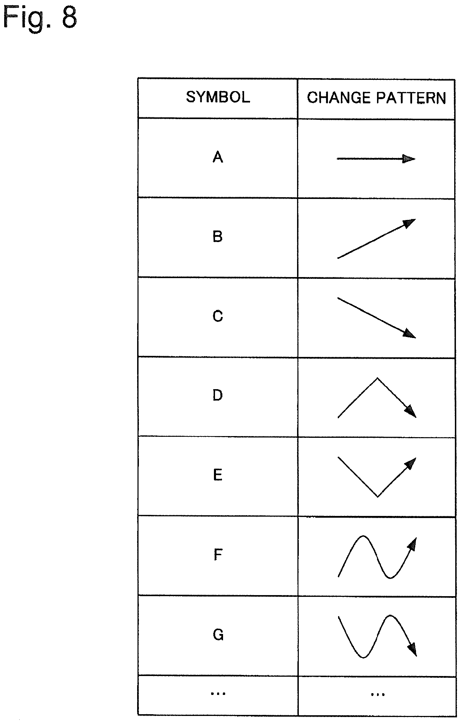

Fig. 8 is a diagram illustrating an example of a time-series change pattern (change pattern) in the first exemplary embodiment of the present invention. The change pattern is a pattern of an increase-decrease trend of measurement values of a metric in a predetermined length of time period. For example, a change pattern of symbol A in Fig. 8 indicates that the measurement value of metric does not change during a predetermined length of time period. A change pattern of symbol B indicates that measurement values of a metric increase during the predetermined length of time period.

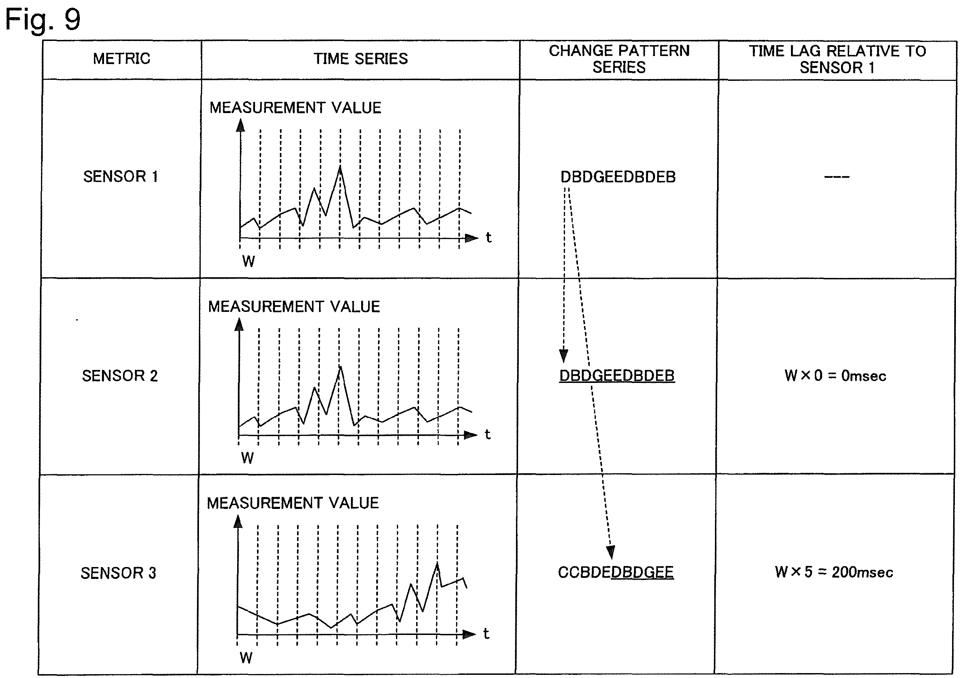

Fig. 9 is a diagram illustrating an example of extraction of a time lag in the first exemplary embodiment of the present invention. In the example of Fig. 9, as a predetermined length W for detecting a change pattern, 40 msec is employed.

The time lag detection unit 102 gives, in accordance with the change patterns as illustrated in Fig. 8, a corresponding symbol for a change pattern to a time series of each metric for each predetermined length of time period W. The time lag detection unit 102 then detects a pair of a preceding metric and a succeeding metric and a time lag for the pair by comparing series of symbols given to each metric for each pair of metrics.

For example, in Fig. 9, series of change pattern symbols "DBDGEEDBDEB", "DBDGEEDBDEB", and "CCB-DEDBDBDGEE" are given to time series of a sensor 1, a sensor 2, and a sensor 3, respectively. By comparing these series with one another, a time lag W×0=0 msec is detected for a pair of the sensor 1 which is taken as the preceding metric and the sensor 2 which is taken as the succeeding metric. Similarly, a time lag W×5=200 msec is detected for a pair of the sensor 1 which is taken as the preceding metric and the sensor 3 which is taken as the succeeding metric.

The time lag detection unit 102 then stores the time lag information 122 as illustrated in Fig. 6 in the time lag storage unit 112.

When a plurality of candidates for a time lag for a pair of metrics are detected in the step S102, the dialogue unit 106 may present the candidates for a time lag to a user or the like and receive an input for selection of a time lag from a user.

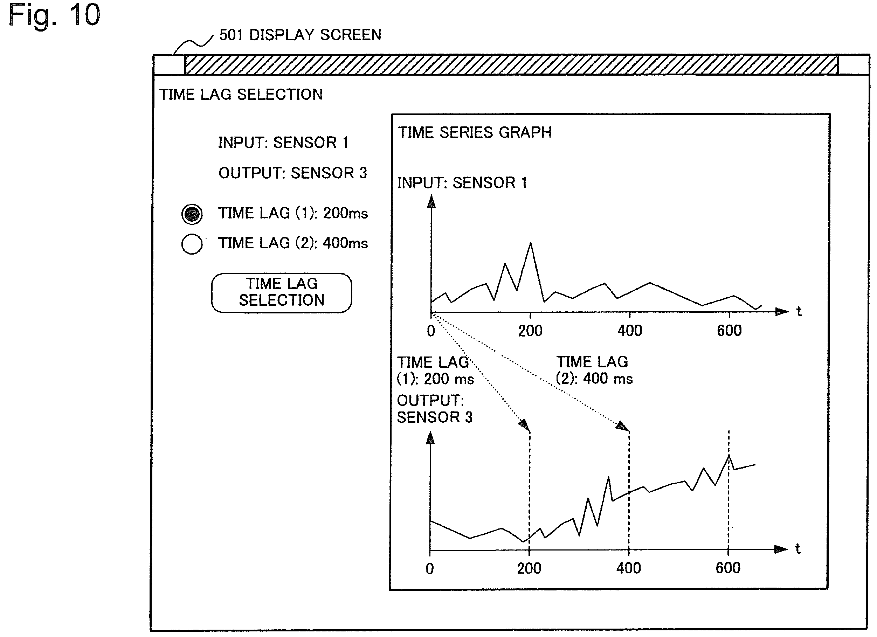

Fig. 10 is a diagram illustrating an example of a display screen 501 (time lag selection) in the first exemplary embodiment of the present invention. The display screen 501 of Fig. 10 displays time series graphs, and indicates that 200 msec and 400 msec are detected as candidates for a time lag for a pair of the sensor 1 which is taken as the preceding metric and the sensor 3 which is taken as the succeeding metric.

In this case, the dialogue unit 106 displays, for example, the display screen 501 of Fig. 10 to a user or the like. The dialogue unit 106 receives the input for selection of a time lag used for analysis from candidates for a time lag, from a user or the like via a time lag selection button in the display screen 501.

The correlation model generation unit 103 of the processing unit 140 generates the correlation model 123 for each pair of metrics contained in the time lag information 122 (step S103). Here, the correlation model generation unit 103 uses a time series obtained by shifting (delaying) a time series of the preceding metric by the time lag as the time series of the input metric, and uses a time series of the succeeding metric as the time series of the output metric. The correlation model generation unit 103 stores the generated correlation model 123 in the correlation model storage unit 113.

For example, it is assumed that measurement values of the sensor 1 and the sensor 3 are $S1(t)$ and $S3(t)$, respectively. In this case, the correlation model generation unit 103 determines, with respect to a pair of the sensor 1 and the sensor 3 in the time lag information 122 of Fig. 6, a correlation function by setting $X(t)=S1(t-200)$ and $Y(t)=S3(t)$ for the input and the output of the equation Math. 1, respectively.

As a result, the correlation model generation unit 103 determines a correlation function, for example, as illustrated in Fig. 7. The correlation model generation unit 103 then stores the correlation model 123 of Fig. 7 in the correlation model storage unit 113.

The data collection unit 101 collects a new measurement value of each metric from the target system 200 (step S104). The data collection unit 101 stores time series of the collected new measurement values of the metrics as the time series data 121 in the data storage unit 111.

The data extraction unit 105 extracts, with respect to each correlation function included in the correlation model 123, measurement values needed for detection of correlation destruction from the new measurement values of the metrics, and outputs them to the correlation destruction detection unit 104 (step S105). Here, the data extraction unit 105 extracts a measurement value of the input metric at or before time t and a measurement value of the output metric before time t needed for calculation of a prediction value of the output metric of the correlation function at time t. It is noted that the data extraction unit 105 extracts a measurement value of the input metric that goes back by the length of the time lag.

For example, the data extraction unit 105 outputs, with respect to a pair of the sensor 1 and the sensor 3 in the correlation model 123 of Fig. 7, S1(t-200) as a measurement value of the input X(t) and S3(t-1) as a measurement value of the output Y(t-1) in the equation Math. 1.

The correlation destruction detection unit 104 detects correlation destruction with respect to each correlation function included in the correlation model 123 by using the new measurement value of each metric extracted by the data extraction unit 105 (step S106). Here, the correlation destruction detection unit 104 applies the measurement value of the input metric at or before time t and the measurement value of the output metric before time t extracted by the data extraction unit 105 to the correlation function and calculates a prediction value of the output metric at time t. The correlation destruction detection unit 104 then detects correlation destruction based on the difference between the measurement value and the prediction value of the output metric at time t.

For example, with respect to the pair of the sensor 1 and the sensor 3 in the correlation model 123 of Fig. 7, the correlation destruction detection unit 104 calculates a prediction value of the sensor 3 at time t in the following manner. The correlation destruction detection unit 104 calculates a prediction value of a value (Y(t)) of the sensor 3 at time t by using a value obtained by multiplying (S3(t-1)) which is a measurement value of Y(t-1) by 0.96 and a value obtained by multiplying (S1(t-200)) which is a measurement value of X(t) by 70.

The dialogue unit 106 presents a detection result of correlation destruction to a user or the like (step S107).

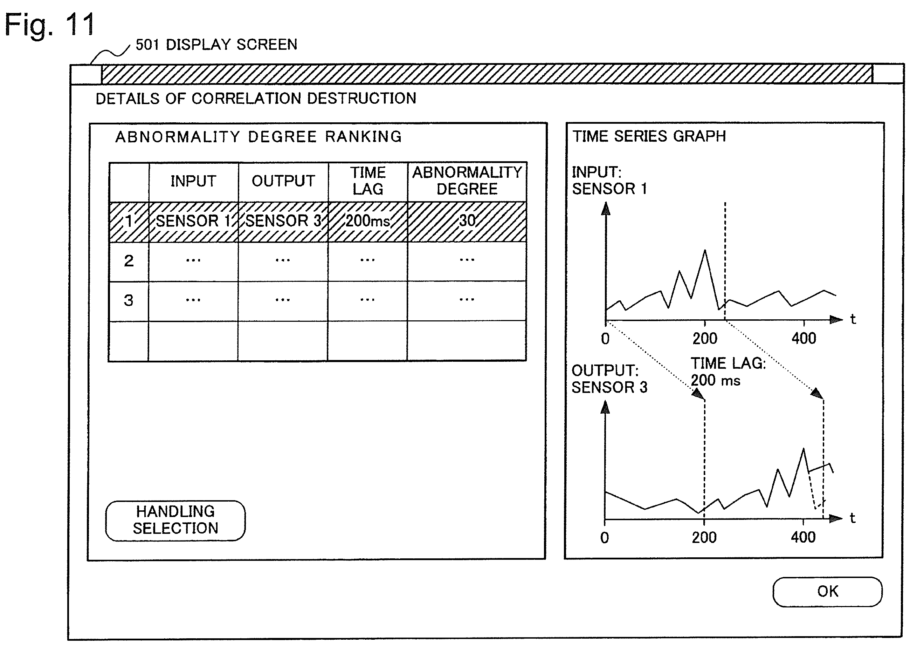

Fig. 11 is a diagram illustrating an example of the display screen 501 (a display of correlation destruction) in the first exemplary embodiment of the present invention. The display screen 501 of Fig. 11 displays that the correlation between the sensor 1 and the sensor 3 is destroyed, in an abnormality degree ranking. The display screen also displays, by time series graphs, that measurement values of the sensor 1 and the sensor 3 change while being shifted from each other by a time lag, and that a current measurement value of the sensor 3 is deviated from a prediction value.

The dialogue unit 106 displays, for example, the display screen 501 of Fig. 11 to a user or the like. The dialogue unit 106 may receive an instruction as to the handling of correlation destruction from a user or the like via a handling selection button in the display screen 501.

The dialogue unit 106 may further display a time series graph corrected for the length of the time lag so that time-series changes between metrics are easily compared with each other.

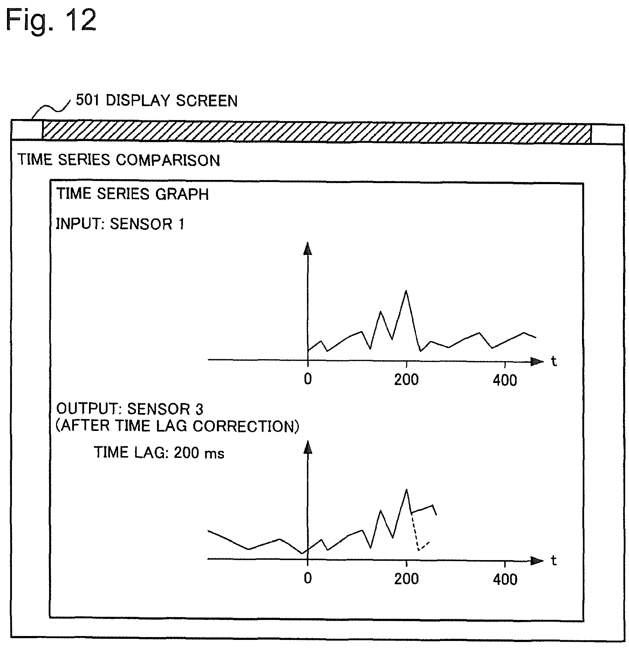

Fig. 12 is a diagram illustrating an example of the display screen 501 (time series comparison) in the first exemplary embodiment of the present invention. Time series graphs of the display screen 501 of Fig. 12 display a time-series change of measurement values of the sensor 1 and a time-series change of measurement values of the sensor 3 that is shifted forward in time by the length of the time lag.

The dialogue unit 106 displays, for example, the display screen 501 of Fig. 12 to a user or the like.

Thereafter, the dialogue unit 106 instructs the handling execution unit 107 to handle the correlation destruction in accordance with an operation from a user or the like. The handling execution unit 107 executes instructed handling on the target system 200.

This completes the operation of the first exemplary embodiment of the present invention.

In the first exemplary embodiment of the present invention, an analysis based on correlation is performed as a comparative analysis between metric values in a target system. The analysis, however, is not limited thereto, and analyses other than the analysis based on correlation may be performed as long as the analysis is a comparative analysis affected by a time lag between metrics.

In the first exemplary embodiment of the present invention, the equation Math. 1 is used for the correlation function. The equation is, however, not limited thereto, and other correlation functions may be used as long as the correlation function represents a correlation between a pair of metrics.

In the first exemplary embodiment of the present invention, the time lag of each pair of metrics is detected by comparing series of time-series change patterns with one another. The detection method is, however, not limited thereto, and the time lag may be detected by other methods such as a method using a time difference between times at which metric values are maximum or minimum or a method using a phase difference between time series of metrics, as long as the time lag can be detected based on change in the metric value.

In the first exemplary embodiment of the present invention, a change pattern as illustrated in Fig. 8 is used for a time-series change pattern (change pattern). The change pattern is, however, not limited thereto, and other change patterns may be used as long as the time lag between time series can be extracted.

In the first exemplary embodiment of the present invention, a time difference is used as the time lag, in a case that a change pattern series of a succeeding metric which is similar (same in the increase-decrease trend) to a change pattern series of a preceding metric occurs. The time difference is, however, not limited thereto, and a time difference may also be used as the time lag, even in a case that the change pattern series of the succeeding metric is opposite to the change pattern series of the preceding metric in the increase-decrease trend.

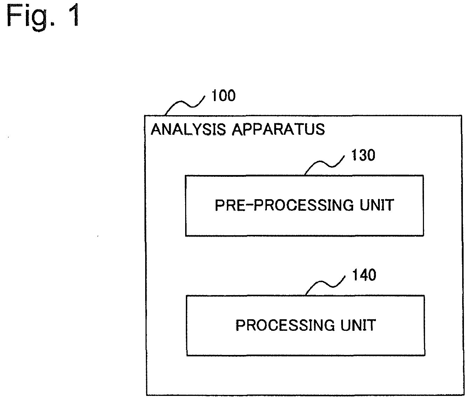

Next, a characteristic configuration of the first exemplary embodiment of the present invention will be described. Fig. 1 is a block diagram illustrating a characteristic configuration of the first exemplary embodiment of the present invention.

The analysis apparatus (information processing apparatus) 100 includes the processing unit 140 and the pre-processing unit 130. The processing unit 140 performs comparative analysis of values of a first metric and a second metric in a system to be analyzed. The pre-processing unit 130 identifies, with respect to the comparative analysis of the first metric and the second metric, a temporal correspondence relation between respective pieces of data used as the first metric and the second metric.

Next, an advantageous effect of the first exemplary embodiment of the present invention will be described.

According to the first exemplary embodiment of the present invention, a decrease in analysis accuracy of a target system can be prevented even when there is a large time lag between metrics of the target system. This is because the pre-processing unit 130 identifies, with respect to the comparative analysis of the first metric and the second metric, a temporal correspondence relation between respective pieces of data used as the first metric and the second metric.

It has been difficult to set the size of a time lag for a correlation as knowledge in advance since the size varies depending on a target system to which sensors are arranged or operating conditions of the target system.

According to the first exemplary embodiment of the present invention, a time lag between metrics depending on a target system can be easily identified. This is because the time lag detection unit 102 detects a time lag by comparing a series of time-series change patterns of a preceding metric, each time-series change pattern being obtained for a predetermined length of time period, with a series of time-series change patterns of a succeeding metric, each time-series change pattern being obtained for the predetermined length of time period.

For the correlation destruction detection unit 104, for example, an analysis engine that uses a dedicated hardware or program may have been used since correlation destruction needs to be detected in real time for newly collected large number of measurement values.

According to the first exemplary embodiment of the present invention, the correlation destruction detection unit 104 (analysis engine) that cannot handle a large time lag can be utilized as it is even when there is a large time lag between metrics of a target system. This is because the data extraction unit 105 extracts a measurement value of the input metric a time lag earlier, and the correlation destruction detection unit 104 detects correlation destruction by using the measurement value extracted by the data extraction unit 105.

(Second Embodiment)

Next, a second exemplary embodiment of the present invention will be described.

The second exemplary embodiment of the present invention is different from the first exemplary embodiment of the present invention in that generation of the time lag information 122 and generation of the correlation model 123 are performed in an apparatus which is different from the analysis apparatus 100. In the second exemplary embodiment of the present invention, a component to which the same reference sign is assigned is the same as the component in the first exemplary embodiment of the present invention unless otherwise specified.

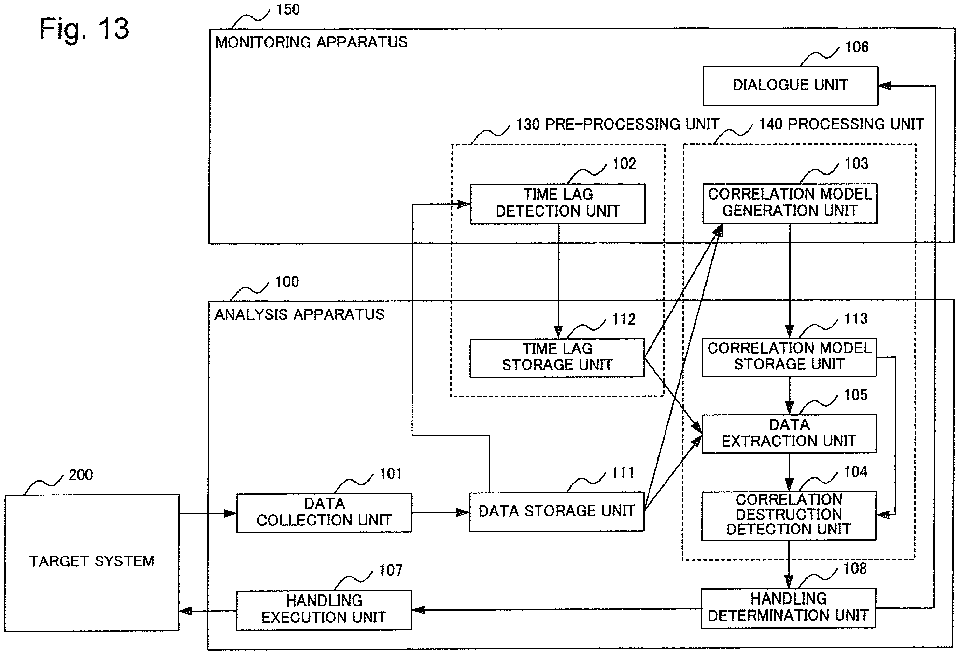

Fig. 13 is a block diagram illustrating a configuration of an analysis system in the second exemplary embodiment of the present invention.

Referring to Fig. 13, the analysis system in the second exemplary embodiment of the present invention includes the analysis apparatus 100, a monitoring apparatus 150, and the target system 200. The analysis apparatus 100 and the target system 200 are communicably connected. The analysis apparatus 100 and the monitoring apparatus 150 are also communicably connected by a network or the like.

The analysis apparatus 100 includes the data collection unit 101, the data storage unit 111, the time lag storage unit 112, the correlation model storage unit 113, the correlation destruction detection unit 104, the data extraction unit 105, and the handling execution unit 107, similarly to the analysis apparatus 100 (Fig. 2) of the first exemplary embodiment of the present invention. In addition thereto, the analysis apparatus 100 further includes a handling determination unit 108.

The monitoring apparatus 150 includes the time lag detection unit 102, the correlation model generation unit 103, and the dialogue unit 106, similarly to the analysis apparatus 100 (Fig. 2) of the first exemplary embodiment of the present invention.

The time lag detection unit 102 of the monitoring apparatus 150 generates the time lag information 122 based on time series data 121 stored in the data storage unit 111 of the analysis apparatus 100.

The correlation model generation unit 103 of the monitoring apparatus 150 generates the correlation model 123 based on the time series data 121 stored in the data storage unit 111 and the time lag information 122 stored in the time lag storage unit 112 of the analysis apparatus 100.

The handling determination unit 108 of the analysis apparatus 100 determines a handling process to be executed in a predetermined condition depending on a detection result of correlation destruction obtained by the correlation destruction detection unit 104, and instructs the execution of handling to the handling execution unit 107. The handling determination unit 108 then presents the execution result of handling to a user or the like through the dialogue unit 106 of the monitoring apparatus 150. The handling determination unit 108 may instructs the handling execution unit 107 to execute an operation for handling in accordance with an operation of a user or the like which is input via the dialogue unit 106, similarly to the first exemplary embodiment of the present invention.

The time lag detection unit 102 and the correlation model generation unit 103 may be included in a still another apparatus which is different from the monitoring apparatus 150.

Next, an advantageous effect of the second exemplary embodiment of the present invention will be described.

According to the second exemplary embodiment of the present invention, a real time abnormality analysis of the target system 200 by detection of correlation destruction can be performed more rapidly compared with the first exemplary embodiment of the present invention. This is because generation of the time lag information 122 by the time lag detection unit 102 and generation of the correlation model 123 by the correlation model generation unit 103 which become a relatively high processing load are executed by an apparatus which is different from the analysis apparatus 100 which performs the abnormality analysis.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2013-199943, filed on September 26, 2013, the disclosure of which is incorporated herein in its entirety by reference.

[Reference signs List]

| | |
|---|---|
| 100 | ANALYSIS APPARATUS |
| 101 | DATA COLLECTION UNIT |
| 102 | TIME LAG DETECTION UNIT |
| 103 | CORRELATION MODEL GENERATION UNIT |
| 104 | CORRELATION DESTRUCTION DETECTION UNIT |
| 105 | DATA EXTRACTION UNIT |
| 106 | DIALOGUE UNIT |
| 107 | HANDLING EXECUTION UNIT |
| 108 | HANDLING DETERMINATION UNIT |
| 111 | DATA STORAGE UNIT |
| 112 | TIME LAG STORAGE UNIT |
| 113 | CORRELATION MODEL STORAGE UNIT |
| 121 | TIME SERIES DATA |
| 122 | TIME LAG INFORMATION |
| 123 | CORRELATION MODEL |
| 130 | PRE-PROCESSING UNIT |
| 140 | PROCESSING UNIT |
| 150 | MONITORING APPARATUS |
| 161 | CPU |
| 162 | STORAGE MEDIUM |
| 163 | COMMUNICATION UNIT |
| 164 | INPUT UNIT |
| 165 | OUTPUT UNIT |
| 200 | TARGET SYSTEM |

**Claims**

1. An information processing apparatus comprising:

a processing means for performing comparative analysis of values of a first metric and a second metric in a system to be analyzed; and
a pre-processing means for identifying, with respect to the comparative analysis of the first metric and the second metric, a temporal correspondence relation between respective pieces of data used as the first metric and the second metric.

2. The information processing apparatus according to claim 1,
wherein time-series changes of the first metric and the second metric are displayed as time-series changes thereof which have been corrected based on the correspondence relation.

3. The information processing apparatus according to claim 1 or 2,
wherein the correspondence relation is a time lag of the time-series change of the second metric relative to the time-series change of the first metric.

4. The information processing apparatus according to any one of claims 1 to 3,
wherein, when a plurality of the correspondence relations are identified, the plurality of the correspondence relations identified are displayed for receiving an input to select one of the plurality of the correspondence relations.

5. The information processing apparatus according to any one of claims 1 to 4,
wherein the comparative analysis is an analysis based on a correlation between time series of the first metric and time series of the second metric.

6. An analysis method comprising:

identifying, with respect to a comparative analysis of a first metric and a second metric in a system to be analyzed, a temporal correspondence relation between respective pieces of data used as the first metric and the second metric; and
performing the comparative analysis of values of the first metric and the second metric.

7. The analysis method according to claim 6,
wherein time-series changes of the first metric and the second metric are displayed as time-series changes thereof which have been corrected based on the correspondence relation.

8. The analysis method according to claim 6 or 7,
wherein the correspondence relation is a time lag of the time-series change of the second metric relative to the time-series change of the first metric.

9. The analysis method according to any one of claims 6 to 8,
wherein, when a plurality of the correspondence relations are identified, the identified plurality of the correspondence relations identified are displayed for receiving an input to select one of the plurality of the correspondence relations.

10. The analysis method according to any one of claims 6 to 9,
wherein the comparative analysis is an analysis based on a correlation between time series of the first metric and time series of the second metric.

11. A computer readable storage medium recording thereon a program, causing a computer to perform a method comprising:

identifying, with respect to a comparative analysis of a first metric and a second metric in a system to be analyzed, a temporal correspondence relation between respective pieces of data used as the first metric and the second metric; and
performing the comparative analysis of values of the first metric and the second metric.

12. The computer readable storage medium recording thereon the program according to claim 11,

wherein time-series changes of the first metric and the second metric are displayed as time-series changes thereof which have been corrected based on the correspondence relation.

13. The computer readable storage medium recording thereon the program according to claim 11 or 12, wherein the correspondence relation is a time lag of the time-series change of the second metric relative to the time-series change of the first metric.

14. The computer readable storage medium recording thereon the program according to any one of claims 11 to 13, wherein, when a plurality of the correspondence relations are identified, the plurality of the correspondence relations identified are displayed for receiving an input to select one of the plurality of the correspondence relations.

15. The computer readable storage medium recording thereon the program according to any one of claims 11 to 14, wherein the comparative analysis is an analysis based on a correlation between time series of the first metric and time series of the second metric.

# Fig. 1

100

ANALYSIS APPARATUS

130

PRE-PROCESSING UNIT

140

PROCESSING UNIT

# Fig. 2

EP 3 051 374 A1

## Fig. 3

100 ANALYSIS APPARATUS

161 CPU

162 STORAGE MEDIUM

| 102 TIME LAG DETECTION UNIT | 103 CORRELATION MODEL GENERATION UNIT |
| 101 DATA COLLECTION UNIT | 104 CORRELATION DESTRU-CTION DETECTION UNIT |
| | 105 DATA EXTRACTION UNIT |
| 107 HANDLING EXECUTION UNIT | 106 DIALOGUE UNIT |

113 CORRELATION MODEL STORAGE UNIT

112 TIME LAG STORAGE UNIT

111 DATA STORAGE UNIT

163 COMMUNICATION UNIT

164 INPUT UNIT

165 OUTPUT UNIT

# Fig. 4

```
        ( START )
            |
```

| | |
|---|---|
| COLLECT MEASUREMENT VALUE OF METRIC | S101 |

| | |
|---|---|
| GENERATE TIME LAG INFORMATION 122 | S102 |

| | |
|---|---|
| GENERATE CORRELATION MODEL 123 BY USING TIME SERIES OBTAINED BY SHIFTING TIME SERIES OF PRECEDING METRIC BY TIME LAG AS TIME SERIES OF INPUT METRIC AND BY USING TIME SERIES OF SUCCEEDING METRIC AS TIME SERIES OF OUTPUT METRIC | S103 |

| | |
|---|---|
| COLLECT NEW MEASUREMENT VALUE OF METRIC | S104 |

| | |
|---|---|
| EXTRACT MEASUREMENT VALUE NEEDED FOR DETECTION OF CORRELATION DESTRUCTION (WITH RESPECT TO INPUT METRIC, EXTRACT MEASUREMENT VALUE A TIME LAG EARLIER) | S105 |

| | |
|---|---|
| DETECT CORRELATION DESTRUCTION | S106 |

| | |
|---|---|
| PRESENT DETECTION RESULT OF CORRELATION DESTRUCTION | S107 |

```
            |
         ( END )
```

15

# Fig. 5

121 TIME SERIES DATA

| TIME | SENSOR 1 | SENSOR 2 | ··· | SENSOR n | ··· |
|---|---|---|---|---|---|
| ··· | ··· | ··· | ··· | ··· | ··· |
| 2012/01/05 17:00:00.025 | 12 | 80 | ··· | 33 | ··· |
| 2012/01/05 17:00:00.026 | 15 | 79 | ··· | 32 | ··· |
| 2012/01/05 17:00:00.027 | 34 | 51 | ··· | 32 | ··· |
| 2012/01/05 17:00:00.028 | 63 | 51 | ··· | 35 | ··· |
| 2012/01/05 17:00:00.029 | 20 | 81 | ··· | 50 | ··· |
| 2012/01/05 17:00:00.030 | 10 | 78 | ··· | 51 | ··· |
| 2012/01/05 17:00:00.031 | 11 | 79 | ··· | 34 | ··· |
| ··· | ··· | ··· | ··· | ··· | ··· |

# Fig. 6

122 TIME LAG INFORMATION

| PRECEDING METRIC | SUCCEEDING METRIC | TIME LAG |
|---|---|---|
| SENSOR 1 | SENSOR 2 | 0ms |
| SENSOR 1 | SENSOR 3 | 200ms |

Fig. 7

123 CORRELATION MODEL

| INPUT METRIC (X) | OUTPUT METRIC (Y) | $A_1$ | ... | $B_1$ | ... | WEIGHT | ... |
|---|---|---|---|---|---|---|---|
| SENSOR 1 | SENSOR 2 | 0.8 | ... | 10 | ... | 0.83 | ... |
| SENSOR 1 | SENSOR 3 | 0.96 | ... | 70 | ... | 0.63 | ... |
| ... | ... | ... | ... | ... | ... | ... | ... |

EP 3 051 374 A1

# Fig. 8

| SYMBOL | CHANGE PATTERN |
|---|---|
| A | |
| B | |
| C | |
| D | |
| E | |
| F | |
| G | |
| ... | ... |

# Fig. 9

| METRIC | TIME SERIES | CHANGE PATTERN SERIES | TIME LAG RELATIVE TO SENSOR 1 |
|---|---|---|---|
| SENSOR 1 | MEASUREMENT VALUE<br>W t | DBDGEEDBDEB | --- |
| SENSOR 2 | MEASUREMENT VALUE<br>W t | <u>DBDGEEDBDEB</u> | $W \times 0 = 0msec$ |
| SENSOR 3 | MEASUREMENT VALUE<br>W t | CCBDE<u>DBDGEE</u> | $W \times 5 = 200msec$ |

EP 3 051 374 A1

Fig. 10

501 DISPLAY SCREEN

TIME LAG SELECTION

INPUT: SENSOR 1

OUTPUT: SENSOR 3

● TIME LAG (1): 200ms

○ TIME LAG (2): 400ms

[ TIME LAG SELECTION ]

TIME SERIES GRAPH

INPUT: SENSOR 1

0    200    400    600    t

TIME LAG (1): 200 ms    TIME LAG (2): 400 ms

OUTPUT: SENSOR 3

0    200    400    600    t

EP 3 051 374 A1

# Fig. 11

501 DISPLAY SCREEN

DETAILS OF CORRELATION DESTRUCTION

### ABNORMALITY DEGREE RANKING

| | INPUT | OUTPUT | TIME LAG | ABNORMALITY DEGREE |
|---|---|---|---|---|
| 1 | SENSOR 1 | SENSOR 3 | 200ms | 30 |
| 2 | ... | ... | ... | ... |
| 3 | ... | ... | ... | ... |
| | | | | |

HANDLING SELECTION

### TIME SERIES GRAPH

INPUT:
SENSOR 1

OUTPUT:
SENSOR 3

TIME LAG:
200 ms

OK

EP 3 051 374 A1

# Fig. 12

501 DISPLAY SCREEN

TIME SERIES COMPARISON

TIME SERIES GRAPH

INPUT: SENSOR 1

OUTPUT: SENSOR 3
(AFTER TIME LAG CORRECTION)

TIME LAG: 200 ms

**Fig. 13**

MONITORING APPARATUS — 150

DIALOGUE UNIT — 106

130 PRE-PROCESSING UNIT    140 PROCESSING UNIT

TIME LAG DETECTION UNIT — 102

CORRELATION MODEL GENERATION UNIT — 103

ANALYSIS APPARATUS — 100

TIME LAG STORAGE UNIT — 112

CORRELATION MODEL STORAGE UNIT — 113

DATA EXTRACTION UNIT — 105

TARGET SYSTEM — 200

DATA COLLECTION UNIT — 101

DATA STORAGE UNIT — 111

CORRELATION DESTRUCTION DETECTION UNIT — 104

HANDLING EXECUTION UNIT — 107

HANDLING DETERMINATION UNIT — 108

EP 3 051 374 A1

## INTERNATIONAL SEARCH REPORT

| International application No. |
| --- |
| PCT/JP2014/004707 |

A. CLASSIFICATION OF SUBJECT MATTER
*G05B23/02*(2006.01)i, *G06F11/34*(2006.01)i, *G06F17/15*(2006.01)i

According to International Patent Classification (IPC) or to both national classification and IPC

B. FIELDS SEARCHED

Minimum documentation searched (classification system followed by classification symbols)
G05B23/02, G06F11/34, G06F17/15

Documentation searched other than minimum documentation to the extent that such documents are included in the fields searched

| | | | | |
| --- | --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2005/028838 A1 (A & D Co., Ltd.), 31 March 2005 (31.03.2005), paragraphs [0025], [0033] to [0036], [0044], [0063]; fig. 1, 2, 11, 12 & US 2007/0057829 A1 & EP 1676992 A1 & KR 10-2006-0128839 A & CN 1849446 A | 1-15 |
| X | JP 1-250818 A (Toshiba Corp.), 05 October 1989 (05.10.1989), page 2, lower left column, line 5 to page 3, lower right column, line 10; fig. 1 (Family: none) | 1-15 |

☐ Further documents are listed in the continuation of Box C. ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 10 October, 2014 (10.10.14) | 28 October, 2014 (28.10.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 4872944 B

- JP 2013199943 A